# EUROPEAN PATENT SPECIFICATION

(11) **EP 2 276 348 B1**
(45) Date of publication and mention of the grant of the patent: **13.02.2013**
(21) Application number: 09711283.3
(22) Date of filing: 15.04.2009
(51) Int. Cl.: A21D 2/16, A21D 2/18, A23D 7/005, A23D 7/015, A23L 1/0522, A21D 13/00, A23D 7/00, A21D 13/06

(54) **LOW FAT WATER-IN-OIL EMULSION**
FETTARME WASSER-IN-ÖL-EMULSION
ÉMULSION EAU DANS L'HUILE À FAIBLE TENEUR EN MATIÈRES GRASSES

(30) Priority: 17.04.2008 EP 08154670
(43) Date of publication of application: 26.01.2011
(73) Proprietor: DSM IP Assets B.V., 6411 TE Heerlen (NL)
(72) Inventor: SEIN, Arjen, NL-2316 AA Leiden (NL); MASTENBROEK, José, NL-2496 HL Den Haag (NL); METSELAAR, Ronald, NL-2901 HD Capelle A/d Ijssel (NL); BUWALDA, Pieter Lykle, NL-9718 MJ Groningen (NL); ROOIJEN, VAN, Christiaan, NL-1704 VP Heerhugowaard (NL); VISSER, Karin Anna, NL-8441 EE Heerenveen (NL)
(74) Representative: Matulewicz, Emil Rudolf Antonius
(86) International application number: PCT/EP2009/054443
(87) International publication number: WO 2009/101215

(56) References cited:
- US-A- 3 962 465
- US-A- 5 576 043
- US-A- 5 686 132
- MARC J.E.C. VAN DER MAAREL, ISABELLE CAPRON, GERRIT-JAN W. EUVERINK, HERMAN TH. BOS, THIJS KAPER, DOEDE J BINNEMA, P.A.M. STEENEKE: "A Novel Thermoreversible Gelling Product Made by Enzymatic Modification of Starch" STARCH/ STÄRKE, vol. 57, 2005, pages 465-472, XP002490562

## Description

This invention relates to the production of low fat water-in-oil emulsions and the use thereof for producing bakery products, in particular puffed pastry.

### Background of the invention

Croissants, Danish and other types of puffed pastry, albeit sweet or savoury, are considered to be the most delicious and delicate pastry items. Their fluffy and crispy texture is derived from a unique combination of dough, fats and water, the laminating process and of course the baking process. By default, there are high demands on the aforementioned items to make the desired products. The traditional choice for the fat component is dairy butter. As an alternative, fats derived from hydrogenated vegetable oils have been developed. Both types of fat contain high amount of solids and hence a large portion of saturated fatty acids. Moreover in puffed pastry large amounts of fats are used to come to the desired texture. This imparts a set of problems to the end user, i.e. the consumer. The end products contain a high portion of fat as well as a high portion of saturated fats. High fat products are high in caloric value, which is connected to the development of obesity. Saturated fats are considered to be unhealthy as compared to unsaturated fatty acids. High levels of saturated fat in diets are linked to cardiovascular health diseases.

However, total fat reduction leads to reduction of consistency and plasticity that is important for baking margarines in general, and laminating margarines in particular.

Further reduction of the relative saturated fatty acid content (percentage of saturated fatty acid as part of only the fat phase) will inevitably lead to further reduction of consistency and plasticity.

Low fat shortening for pastry has been described before in Patent JP 2004008147. In this patent part of the fat has been replaced by a gel made with water and a low DE maltodextrin based on waxy starch. This approach covers several drawbacks. First of all the production of the pastry has to be performed at low temperature, because the melting point of the low DE maltodextrin gel is low. A second drawback is in the puffing. The low DE dextrin gel melts at a low temperature which may cause uneven puffing, and may even lead to reduced rise.

Moreover, this solution could lead to lower fat, but not necessarily to an even further reduced saturated fatty acid level. Finally, to make this application work relatively high levels of maltodextrins are needed, 6 to 60%.

### Summary of the invention

The present invention discloses a water-in-oil emulsion which comprises oil or fat or a mixture of one or more oils and fats, and water and amylomaltase treated starch which comprises acyclic amylopectin present in the water phase.

Moreover the present invention relates of amylomaltase treated starch which comprises acyclic amylopectin in a water-in-oil emulsion which comprises oil or fat or a mixture of one or more oils and fats, and water preferably 1 - 12 wt% of amylomaltase treated starch is present in the water phase, more preferably 3 to 10 wt%, and the use of amylomaltase treated starch in a water-in-oil emulsion. Preferably the water-in-oil emulsion has a fat content of between 15 and 80 wt%, more preferably of between 20 and 80 wt%, even more preferably of between 35 and 70 wt% and most preferably of between 40 and 70 wt%.

The water-in-oil emulsion of the invention is advantageously used to prepare a margarine or a spread, preferably a baking margarine, with a lower saturated fatty acid (SAFA) content than a baking margarine prepared without the amylomaltase treated starch. The spread can be used on bread or as topping.

Furthermore the present invention relates to a process for the preparation of a pastry or baked product which comprises the use of the water-in-oil emulsion of the invention in the preparation of the pastry or baked product, preferably a puff pastry or a cake or cookie prepared through a rotary moulding process.

The pastry or baked product according to the invention comprises a reduced fat content compared to a pastry or baking product whereby the shortening used does not comprise amylomaltase treated starch.

### Detailed description of the invention

Puffed pastry used herein is synonym to puff pastry.

It is the object of this patent to provide a water-in-oil emulsion, which contains therefore also less saturated fatty acids within the total composition relative to shortenings presently on the market. It is another object of this patent to even reduce the fat content of the water-in-oil emulsion of the invention relative to a water-in-oil emulsion without the amylomaltase treated starch, for example as the commercially available water-in oil emulsions. It is a further object to reduce the saturated fatty acid content of the water-in-oil emulsion of the invention compared to the saturated fatty acid content of a water-in-oil emulsion without the amylomaltase treated starch, for example as used in the shortenings presently on the market. Typical saturated fatty acid levels in commercial baking margarines range from 40 to 60 wt% on the total product. Now baking margarines with less than 40 wt% saturated fat can be obtained, even less than 30 wt% or even less than 20 wt%.

The end (bakery) products prepared with the water-in-oil emulsion of the present invention are as delicate and delicious as the full-fat equivalents.

An example of a water-in-oil emulsion is a (water containing) shortening which comprises a semisolid (at 20°C) fat and is used in food preparation, especially baked goods, and is so called because it promotes a "short" or crumbly texture (as in shortbread). The term "shortening" can be used more broadly to apply to any emulsion comprising oil or fat that is used for baking and which is solid at 20°C, such as butter, lard, or margarine, but as used in recipes it refers preferably to a hydrogenated vegetable oil that is solid at room temperature. Shortening in the present text means a water containing shortening. Although the term has been in use for many years it is now known that shortening works by inhibiting the formation of long protein (gluten) strands in wheat-based dough. The similarity in terms is entirely coincidental since full understanding of the structure and chemistry of dough is comparatively recent (see also http://en.wikipedia.org/wiki/Shortening).

Apart from the fat or oil phase, the present shortening will comprise a water phase. In the present invention the shortening comprises a water phase. Therefore the shortening is a water-in-oil emulsion.

Shortening and margarine are used herein interchangeably. In all cases it is meant to represent an oil-continuous product with 20 to 80 wt% water dispersed in small droplets in the oil phase. Hence the water-in-oil emulsion of the invention comprises 20 to 80 wt% water.

In many baking processes margarines are used that have specific requirements on plasticity and consistency. These include margarines for cakes and creaming, all purpose margarine for cookies and shortbread and laminating margarine for puff pastry. In this order the typical consistency of the product increases.

Puffed pastry is manufactured by a process known as laminating. Dough (with or without yeast) is rolled and layered with fat, folded and rolled again, folded and rolled etc. This leads to a manifold of layers of dough and fat that upon baking results in the desired fluffy end product. Well known examples are croissants, Danish, filo, Apfelstrudel, casserole covers, meat pastries, fruit pies, etc.

A number of processes to make the layered dough have been described. These include the traditional dough preparation and subsequent sheeting and folding, and extrusion and subsequent folding. Alternatively the flaky pastry process exists, where the shortening is cut in smaller pieces and mixed into the dough, followed by sheeting and folding. It is noted that any variation of this process is part of the present invention.

As stated before there are high demands on the fat component. Melting characteristics upon baking, temperature at which the fat and dough can be processed, taste of the final products are amongst the items that are important to the producer.

Margarines for puff pastry should display good plasticity during sheeting and also have substantial consistency. In conventional baking margarines this is obtained in a product with at least 80% by weight of oil/fat, with a fat blend containing high levels of solid fat at temperatures used during processing, commonly at room temperature (20°C). Solid fat content at a certain temperature is measured by Time-Domain NMR, for instance by a Minispec NMR bench top spectrophotometer by Brucker, described by AOCS method Cd16-81 (99) (see www.aocs.org). To obtain a relatively high level of solid fat, these products contain relatively high levels of triglycerides with saturated fatty acids. The saturated fatty acid (SAFA) content is based on the saturated fatty acid levels of the individual components of the fat blend. The level is usually given by the supplier of the particular fat or oil. This saturated fatty acid level can be determined by GLC using the Fatty Acid Methyl Ester (FAME) method, described by AOCS method Ce 1-62 (97) (see www.aocs.org).

The water phase is present in small droplets in the continuous oil phase. The water phase of common baking margarines does not contain hydrocolloids. Upon reduction of the fat level the water phase needs to add extra consistency to the product. This can be obtained by adding a hydrocolloid, such as gelatin or gum-based hydrocolloids such as carrageenan, alginate or pectin to the water phase. Although these add to the consistency, the resulting baked product can obtain a poor texture, gummy, not enough rise or leavening. Also the lamination, the degree of flakiness and the rise of the baked product are reduced by the use of these hydrocolloids. Cakes also will become extremely tough and gummy with such hydrocolloids, so textures that are sensorially unacceptable.

Surprisingly it has now been found that making a low-fat, low saturated fatty acid baking (or bakery) margarine with amylomaltase treated starch which comprises acyclic amylopectin yields a baking margarine that has the same characteristics as the full-fat, normal saturated fatty acid content equivalent.

The present invention provides a low fat shortening which is prepared from a suitable hydrogenated, partly hydrogenated or non-hydrogenated oil or fat blend and a water phase which comprises amylomaltase-treated starch which comprises acyclic amylopectin. Thus the water-in-oil emulsion of the invention comprises oil or fat or a mixture of one or more oils and fats, and water.

In contrast to other lower fat bakery margarine compositions, this composition as a laminating margarine is better capable of separating the thin dough layers in the laminating process, so these do not stick to each other during the baking process. It inhibits the formation of links between the gluten layers of the separate dough layers.

The production of amylomaltase treated starch has been described in patent EP 0932444 B1. An amylose containing starch is converted by an alpha-1-4, alpha-1-4 glucosyltransferase (amylomaltase or EC2.4.1.25) to a chain-elongated amylopectin. The typical and relevant activity of the amylomaltase is that they are capable of breaking an alpha-1-4 bond between two glucose units to subsequently make a novel alpha-1-4 bond. In the end the amylose is reattached to the amylopectin resulting in the desired product. So smaller pieces/oligosaccharides split from amyloses are reattached to the end groups of the branches of the amylopectin resulting in the desired product: a elongated amylopectin. The amylomaltase treated starch produced according to patent EP 0932444 B1, has no or essentially no cyclic structures like cyclic glucans but rather acyclic structures including acyclic amylopectin. The amylomaltase treated starch used according to the present invention has advanteously no or essentially no cyclic structures like cyclic glucans but rather acyclic structures including acyclic (elongated) amylopectin. In US5686132 cyclic glucans are produced by treatment of starch with a D-enzyme. However only in case of a high enzyme amount and long reaction times these cyclic glucans are formed. The presently used amylomaltase treated starch has a portion of acyclic structure of at least 99%, preferably 100%, as determined using the method described in US5686132.

The product forms thermoreversible gels in low concentrations in water. It is an object of the present invention to provide a starch gel that has suitable characteristics to serve as a fat replacer in shortening of varied nature that can be used to prepare low fat puffed pastry. The invention provides a starch composition, comprising, as stated before, of an amylomaltase treated starch. Starches suitable for use is a composition according to the invention are for example chosen from maize, wheat, barley, rice, triticale, rice, millet, tapioca, arrow root, banana, potato, sweet potato starches or from high amylose starches like amylomaize, wrinkled pea starch, mung bean starch. High amylose starches my be derived from naturally occurring mutant from cereal starches like high amylose corn, or peas, beans etc. or from genetically modified plant varieties such as potatoes modified to preferentially produce amylose. Alternatively, the amylomaltase treated starches can be derived form a blend of amylose containing starches and amylopectin rich starches like waxy maize, waxy barley, waxy wheat, waxy rice, amylopectin potato, amylopectin tapioca, amylopectin sweet potato or amylopectin banana starch. Amylopectin starches may be derived from plants that selectively produce amylopectin such as waxy cereals or amylose-free potato mutants and/or genetically modified plant varieties such as potatoes and tapioca modified to selectively produce amylopectin.

It is understood that chemical or physical modification of the starch is included in the present invention.

In EP0932444 the production of alpha 1-4, alpha 1-4 glucosyltransferase (amylomaltase or EC 2.4.1.25) as well as the action of alpha 1-4, alpha 1-4 glucosyltransferase (amylomaltase or EC 2.4.1.25) on starch is described. "Alpha 1-4, alpha 1-4 glucosyltransferase" and "amylomaltase" will be interchangeable used in this text. This enzyme does not degrade the starch, but reattaches the amylose onto the amylopectin. The resulting product forms gels above 3% (w/w) solutions in water. These gels, although particulate in nature, have a texture normally connected to gums and other hydrocolloids and are different from gels of acid- or amylase-degraded or debranched products. The gels of amylomaltase-treated starch are thermoreversible at approximately 60°C. "Amylomaltase treated starch", "amylomaltase converted starch" and "amylomaltase modified starch" will be interchangeable used in this text, meaning that the starch is modified by amylomaltase activity. Preferably the enzymatic conversion (or modification or treatment) can be followed by means of reduction of the viscosity when the conversion takes place at 60-75°C. After the desired viscosity reduction has been reached, the conversion can be broken down (see EP0932444).

An example of the production of amylomaltase treated starch is described in EP0932444. The amylomaltase treated starch can be prepared from suspension of potato starch in water (19 - 20 % w/w). This suspension is jet-cooked at 150 - 160°C in order to dissolve the starch. The product is cooled *in vacuo* to 70°C. Flash cooling is a preferred option. The pH is adjusted to 6.2 using for example 6N H₂SO₄. Then amylomaltase (2 ATU/g starch) is added. The solution was stirred for 2 to 20 hr at 70°C. Then the solution is jet cooked at 130 °C for a short time, for example 1 to 20 seconds and spray dried using for example a model Compact spray dryer (Anhydro, Denmark).

The low fat shortening is prepared from suitable hydrogenated, partly hydrogenated or non-hydrogenated oil or fat blend and a water phase. The oil can be derived from palm, canola, corn, olive, sunflower, soybean, safflower and the like. The fat is emulsified to form a water-in-oil emulsion. Alternatively the oil phase can be derived from butter or butter fractions or by a mixture of vegetable origin derived fats and oils and animal derived fats and oils. The person skilled in the art knows how to compose a fat blend with a specific SAFA level and melting behaviour. The water phase consists of a solution of amylomaltase treated starch in water. The concentration of the amylomaltase treated starch in water lies between 1 and 12% (w/w calculated on the water phase) preferably between 3 and 10% (w/w). The amount of water phase (including the other ingredients in the water phase) in the total composition lies between 20 and 80%, preferably between 30 and 70%. The pH value of the water phase is between 1 and 5, more preferably between 3 and 5. The lower pH value can be obtained by the use of normal food-grade acids, such as lactic acid or citric acid, or by buffer systems.

The following theory is given on the effect related to the present invention. However the present invention does not fall or stand with the correctness of this theory. It is believed that the amylomaltase treated starch which comprises acyclic amylopectin adds so much structure to the water phase that the water droplets strongly contribute to the overall macroscopic consistency of the product. In this way it partially can take over the texturising role of fat crystals made up from highly saturated fatty acid containing triglycerides in margarine or spread.

To prepare the water-in-oil emulsion separate oil and water phases are prepared and these phases are blended and emulsified together into an oil-continuous premix. Subsequently this warm premix is processed through a series of scraped-surface heat exchangers (cooling down under high shear) and pin stirrers or stirred crystallisers, and usually at the end of the process passed through a resting tube before packing. Alternatively the amylomaltase treated starch can be dispersed in the oil phase before the water phase is added. Then after dispersing the water phase into the premix, a similar process can be used to obtain the margarine. Alternatively a lower fat spread can be obtained by mixing the water phase and oil phase to obtain a water continuous premix. Subsequently this warm premix is processed through a series of scraped-surface heat exchangers and pin stirrers or stirred crystallisers, during which process the product phase inverts into a water-in-oil emulsion. Finally the product then is packed in tubs or wrappers.

The oil phase generally may contain in addition to fat or oil, fat-soluble components such as colours, vitamins, emulsifiers and/or crystal modifying agents. Typical emulsifiers will be mono- and di-glycerides, lecithins and/or lysolecithins. The water phase may contain water-soluble flavours and vitamins and other water-soluble and dispersible materials such as proteins, preservatives and salts. The water phase may contain in addition also other biopolymers such as proteins, for instance milk protein or vegetable protein or gelatine, unmodified starches, physically modified starches or enzymatically modified starches or chemically modified starches or maltodextrins, or hydrocolloids like locust bean gum, guar gum, xanthan gum, alginates, carrageenans or pectins or mixtures thereof.

The process for the preparation of the laminated baked product consists of applying the shortening to be rolled on sheet of dough comprised of water and flour and minor components such as fat (shortening or margarine) and optionally yeast, salt, sugar, enzymes and so forth. The covered sheet is then folded and subsequently covered and folded several times more. This process is well known to the artisan in particular traditional bakers and industrial bakers. The resulting product is a multilayered dough that can be baked directly or generally left to rest first. Or, it can be cooled or frozen to be baked off later, or par-baked and stored (for instance in controlled environment or frozen) to be baked off later.

The process for the preparation of a cake may consist for instance of combining the lower fat lower SAFA shortening with eggs, sugar, flour, leavening agents and minor components, and mix this into a batter. Baking pans are filled with this batter and baked in an oven.

The following examples demonstrate the invention.

### Examples

### General

One Amylo Maltase unit (ATU) is defined as the amount of amylomaltase which produces 1 µmol of glucose per minute under the assay conditions of the test.

### Assay:

Amylomaltase is incubated with maltotriose at pH 6.50 and 70°C, releasing glucose from the substrate. The incubation is stopped by adding hydrochloric acid. The amount of released glucose is a measure for the amylomaltase activity and is examined using a glucose test assay (NADH formation) on a Selectra analyzer at a wavelength of 340 nm.

### Example 1

### Preparation of a low fat puffed pastry product

Laminating margarine products were made from a blend of oils and fats, containing coconut, palm stearine, palm oil and/or sunflower oil. The composition of the three products is given in the table 1: a reference product with around 80% of fat and a normal SAFA level, and two test products with around 60% of fat and a water phase containing AMT starch, of which one also a reduced SAFA level (also relative to the total fat composition). The SAFA levels are calculated from individual known SAFA levels of the specific oils.

The oils and fats were blended at 70°C, partly saturated monoglyceride, a mix of vitamin A and D, and beta carotene were added. Separately, the water phase was made by combining salt, citric acid, EDTA and in experimental products the amylomaltase treated starch in water. The oil phase was brought into a premix tank and while stirring the water phase was slowly added. This then was processed through a series of scraped-surface heat exchangers and pin stirrers and a resting tube and then collected in a tub. Products were stored at 18°C until further use.

Water droplet sizes (D[4,3]) were measured by light scattering (Malvern MasterSizer X, method ISO 13220-1, through dispersion in non polar solvent, performed by the German Institute for Food research, DIL, Quackenbrück, Germany).

The products showed good consistency and plasticity after processing and after storage.

**Table 1**

| | Reference | Product 1 | Product 2 |
|---|---|---|---|
| *Oil phase* | | | |
| Blend of oils | 78.4 | 58.5 | 58.8 |
| monoglyceride | 1.5 | 1.1 | 1.1 |
| vitamin mix, carotene, aroma | 0.01 | 0.01 | 0.01 |
| | | | |

| *Water phase* | | | |
|---|---|---|---|
| citric acid | 0.1 | 0.1 | 0.1 |
| salt | 1.5 | 1.1 | 1.1 |
| water | 18.4 | 35.3 | 34.9 |
| AMT starch | - | 3.9 | 3.9 |
| EDTA | 0.1 | 0.1 | 0.1 |
| SAFA on product | 45.7 | 34.3 | 28.6 |
| D[4,3] | 2.0 | 4.0 | 2.7 |

| | | | |
|---|---|---|---|
| All amounts given in wt% | | | |

### Baking test

A dough was kneaded from 1000 gram flour, 150 gram margarine (reference or product 1 or 2), 10 gram salt and 550 gram water, and was left to rest for 15 minutes after kneading.

Then the dough was rolled into one layer by a laminator, the margarine (at room temperature) was rolled into one layer and put on top of the dough layer. The dough was folded around the margarine layer in such a way that the margarine layer was fully covered with dough of equal thickness. This was subsequently rolled out in the laminator to a laminated piece of approximately 1 cm thick and left to rest for 30 minutes at 4°C. Then it was folded and sheeted in such a way that either 300 (approximately) or 144 layers of dough were obtained. Between each folding and sheeting the dough was left to rest for 30 minutes at 4°C.

In this way all three margarines mentioned in Table 1 were turned into laminated doughs of both 300 (approximately) and 144 layers, six doughs in total. Margarines were used for lamination as well as in the dough layer.

Out of each dough, six squares of 10x10 cm were cut and out of the middle of each square a smaller square was cut. The squares were weighed and baked for 20 minutes in an oven (type) on 200°C. The inner square was taken out after baking.

After cooling down the height, width and weight was measured of six squares taken out of each dough. Average values for the height, the shrinkage of the width and the weight loss are given in Table 2 below.

**Table 2**

| | Dough 1 (app. 300 layers) | | | Dough 2 (144 layers) | | |
|---|---|---|---|---|---|---|
| | Ref. | Product 1 | Product 2 | Ref. | Product 1 | Product 2 |
| Height (mm)* | 51.8 | 50.7 | 40.0 | 55.3 | 56.5 | 56.3 |
| Shrinkage (mm)* | 19.3 | 12.8 | 11.3 | 23.7 | 15.0 | 19.0 |
| Loss (%) | 25.3 | 28.0 | 25.8 | 25.8 | 27.3 | 25.2 |

| | | | | | | |
|---|---|---|---|---|---|---|
| * Average of 6 values | | | | | | |

The laminated baked products were cut vertically. Pictures were taken of the overall product and the sectional planes were recorded digitally by C-Cell for image analysis. The evenness of the overall products as well as of the sectional planes was assessed by the eye.

It can be concluded from the results in Table 2 that within the products with the high number of layers, the normal SAFA lower fat margarine gives the same rise and less shrinkage than the reference. The lower SAFA, lower fat margarine gave even less shrinkage, was slightly less risen and had about the same amount of water loss.

In the product with the lower number of layers the experimental products gave slightly more risen products compared to the reference. The shrinkage was considerably less for both experimental products. And again the weight loss of the second experimental product - lower SAFA, lower fat - was comparable to the reference product. The number of cells for the baked products made with the experimental margarines was higher.

In conclusion: puff pastry made from margarines with lower fat and amylomaltase treated margarines were on some parameters as good as the reference and on some other parameters even better than the reference. The reduced SAFA lower fat margarine was in some aspects as good as the normal SAFA lower fat margarine and in other aspects even better.

### Example 2

### Preparation of a low fat rotary moulder product

Rotary moulder margarine products were made from a blend of oils and fats, containing palm stearine, palm oil rape oil and/or sunflower oil or fractionated palm oil. The composition of the two products is given in the table 3: a reference product with around 80% of fat and normal SAFA levels, and a test product with around 60% of fat, reduced SAFA level (also relative to total fat composition) and a water phase containing AMT starch. The SAFA levels are calculated from individual known SAFA levels of the specific oils.

The oils and fats were blended at 70°C, partly saturated monoglyceride, a mix of vitamin A and D, and beta carotene were added. Separately, the water phase was made by combining salt, citric acid, EDTA and in experimental products the amylomaltase treated starch in water. The oil phase was brought into a premix tank and while stirring the water phase was slowly added. This then was processed through a series of scraped-surface heat exchangers and pin stirrers and a resting tube and then collected in a tub. Products were stored at 18°C until further use.

The products showed good consistency and plasticity after processing and after storage.

**Table 3**

| | Reference | Product 1 |
|---|---|---|
| *Oil phase* | | |
| Blend of oils | 78.8 | 58.8 |
| monoglyceride | 0.9 | 0.9 |
| vitamin mix, carotene, aroma | 0.01 | 0.01 |
| | | |

| *Water phase* | | |
|---|---|---|
| citric acid | 0.08 | 0.08 |
| salt | 1.21 | 1.21 |
| water | 18.7 | 37.6 |
| AMT starch | | 2 |
| EDTA | 0.1 | 0.1 |
| SAFA on product | 42 | 23 |
| All amounts given in wt% | | |

### Baking test

A dough was kneaded from 295 gram of margarine (reference or product 1), 270 gram of sugar, 10 gram of citrus flavour, 1.5 gram salt, 450 gram of flower, and some baking powder.
After kneading the dough was left to rest for 30 minutes.
Then the dough was cut into pieces by a scraper and led through a rotary moulder and shaped in circular pieces of dough. These products were put on a baking sheet and baked in a medium hot oven set on 180 °C with an baking time of approximately 20 minutes, resulting in round cookies
After cooling down the height, width and weight of the baked objects was measured.

**Table 4**

| | Reference | Product 1 |
|---|---|---|
| Height (mm) | 3.5 | 3.6 |
| Width (cm) | 5.3 | 5.3 |
| Weight in grams per 10 | 100 | 101 |

The baked products were given an organoleptic judgment by a panel of experienced bakers on structure, taste and brittleness. The evenness of the overall products as well as of the sectional planes was assessed by the eye. All the parameters were judged the same.

It can be concluded from the results in Table 4 that within the products that the normal fat / normal SAFA margarine and the low fat / low SAFA give the same baking result. The lower SAFA, lower fat margarine even gave the same shrinkage. In conclusion: the final baked products made from the lower fat and lower SAFA composition gave the same end results as the reference composition without changing the processing parameters.

### Example 3

### Preparation of a low fat, low SAFA cake product

Cake margarine products were made from a blend of oils and fats, containing coconut, palm stearine, palm oil, sunflower oil, rape oil, partially hydrogenated palm oil, palm kernel oil and palm olein. The composition of the two products is given in the table 5: a reference product with around 75% of fat and normal SAFA levels, and a test product with just below 60% of fat, reduced SAFA level (also relative to total fat composition) and a water phase containing AMT starch. The SAFA levels are calculated from individual known SAFA levels of the specific oils.

The oils and fats were blended at 70°C, partly saturated monoglyceride, a mix of vitamin A and D, and beta carotene were added. Separately, the water phase was made by combining salt, citric acid, EDTA and in experimental products the amylomaltase treated starch in water. The oil phase was brought into a premix tank and while stirring the water phase was slowly added. This then was processed through a series of scraped-surface heat exchangers and pin stirrers and a resting tube and then collected in a tub. Products were stored at 18°C until further use.

The products showed good consistency and plasticity after processing and after storage.

**Table 5**

| | Reference | Product 1 |
|---|---|---|
| *Oil phase* | | |
| Blend of oils | 74.1 | 58.6 |
| monoglyceride | 0.9 | 0.9 |
| vitamin mix, | 0.01 | 0.01 |
| carotene, aroma | | |
| | | |

| *Water phase* | | |
|---|---|---|
| citric acid | 0.08 | 0.08 |
| Salt | 1.21 | 1.21 |
| Water | 18.7 | 37.6 |
| AMT starch | | 2 |
| EDTA | 0.1 | 0.1 |
| SAFA on product | 43 | 13.5 |
| All amounts given in wt% | | |

### Cake baking test

A batter was made form 1100 gram cake mix, 500 gram egg and 500 gram of margarine (reference or product 1).
The batter was whisked for approximately 2 minutes in a Hobart mixer until a density of 0.92 to 0.98 gram/l was reached.
Then the batter was poured into the baking trays and baked in the oven for one hour at a temperature of 170 °C
After cooling down the height and water activity of the cakes were measured.

**Table 6**

| | Reference | Product 1 |
|---|---|---|
| Height (cm) | 15.2 | 15.8 |
| Water activity at 20°C | 0.84 | 0.85 |

The baked products were given an organoleptic judgment by a panel of experienced bakers on structure and taste. The evenness of the overall products as well as of the sectional planes was assessed by the eye. No clear differences were observed in cakes made from either margarine composition, only the mouthfeel of the cake made with the test product was more preferred by the panel.

It can be concluded from the results in Table 6 that within the products the normal fat / normal SAFA composition and the lower fat / lower SAFA composition gave the same baking result. The cake made from the lower fat / lower SAFA composition even gave a better mouthfeel.

In conclusion: the final cake products made from the lower fat / lower SAFA composition gave the same end results as the reference without changing the processing parameters.

## Claims

1. A water-in-oil emulsion which comprises oil or fat or a mixture of one or more oils and fats, and water and amylomaltase treated starch present in the water phase, whereby the amylomaltase treated starch comprises acyclic amylopectin.

2. A water-in-oil emulsion according to claim 1 which has a saturated fatty acid level of less than 40 wt% on total product, more preferably less than 30 wt%.

3. Use of amylomaltase treated starch in a water-in-oil emulsion which comprises oil or fat or a mixture of one or more oils and fats, water and amylomaltase treated starch is present in the water phase, preferably 1 - 12 wt% of amylomaltase treated starch is present in the water phase, more preferably 3 to 10 wt% and whereby the amylomaltase treated starch comprises acyclic amylopectin.

4. Use of claim 3 whereby the water-in-oil emulsion has a fat content of between 15 and 80 wt%, preferably of between 20 and 80 wt%, more preferably of between 35 and 70 wt% and most preferably of between 40 and 70 wt%.

5. Use according to claim 3 or 4 to prepare a margarine, preferably a baking margarine, with a lower saturated fatty acid (SAFA) content than a baking margarine prepared without the amylomaltase treated starch.

6. Use according to claim 5 wherein the margarine has a saturated fatty acid level of less than 40 wt% on total product, more preferably less than 30 wt%.

7. Process for the preparation of a pastry or baked product which comprises the use of the water-in-oil emulsion of claim 1 in the preparation of a pastry or baked product, preferably a puff pastry or a cake or cookie prepared through a rotary moulding process.

8. Pastry or baked product which is obtained by the process of claim 7 and which comprises a reduced fat content compared to a pastry or baking product whereby a water-in-oil emulsion is used which does not comprise amylomaltase treated starch.

## Patentansprüche

1. Wasser-in-Öl-Emulsion, umfassend Öl oder Fett oder ein Gemisch von einem oder mehreren Ölen und Fetten, und Wasser und Amylomaltase-behandelte Stärke, die in der Wasserphase vorhanden ist, wobei die Amylomaltase-behandelte Stärke acyclisches Amylopectin umfasst.

2. Wasser-in-Öl-Emulsion gemäß Anspruch 1, die einen Gehalt an gesättigter Fettsäure von weniger als 40 Gew.-% des Gesamtprodukts, bevorzugter weniger als 30 Gew.-%, aufweist.

3. Verwendung einer Amylomaltase-behandelten Stärke in einer Wasser-in-Öl-Emulsion, umfassend Öl oder Fett oder ein Gemisch von einem oder mehreren Ölen und Fetten, Wasser und Amylomaltase-behandelte Stärke, die in der Wasserphase vorhanden ist, wobei vorzugsweise 1-12 Gew.-% an Amylomaltasebehandelter Stärke in der Wasserphase vorhanden ist, bevorzugter 3 bis 10 Gew.-%, und wobei die Amylomaltase-behandelte Stärke acyclisches Amylopectin umfasst.

4. Verwendung gemäß Anspruch 3, wobei die Wasser-in-Öl-Emulsion einen Fettgehalt zwischen 15 und 80 Gew.-% aufweist, vorzugsweise zwischen 20 und 80 Gew.-%, bevorzugter zwischen 35 und 70 Gew.-%, höchst bevorzugt zwischen 40 und 70 Gew.-%.

5. Verwendung gemäß Anspruch 3 oder 4 zum Herstellen einer Margarine, vorzugsweise einer Backmargarine, mit einem geringeren Gehalt an gesättigter Fettsäure (SAFA) als eine ohne die Amylomaltase-behandelte Stärke hergestellte Backmargarine.

6. Verwendung gemäß Anspruch 5, wobei die Margarine einen Gehalt an gesättigter Fettsäure von weniger als 40 Gew.-% des Gesamtprodukts, bevorzugter weniger als 30 Gew.-%, aufweist.

7. Verfahren zum Herstellen eines Gebäcks oder eines gebackenen Produkts, umfassend die Verwendung der Wasser-in-Öl-Emulsion gemäß Anspruch 1 bei der Herstellung eines Gebäcks oder gebackenen Produkts, vorzugsweise eines Blätterteiggebäcks oder eines Kuchens oder Kekses, hergestellt durch ein Rotationsformverfahren.

8. Gebäck oder gebackenes Produkt, erhalten durch das Verfahren gemäß Anspruch 7, umfassend einen verringerten Fettgehalt im Vergleich zu einem Gebäck oder gebackenen Produkt, bei dem eine Wasser-in-Öl-Emulsion verwendet wird, die keine Amylomaltase-behandelte Stärke umfasst.

## Revendications

1. Emulsion eau dans l'huile qui comprend de l'huile ou des matières grasses ou un mélange d'une ou plusieurs huiles et matières grasses, et de l'eau et de l'amidon traité par l'amylomaltase dans la phase aqueuse, l'amidon traité par l'amylomaltase comprenant de l'amylopectine acyclique.

2. Emulsion eau dans l'huile selon la revendication 1, **caractérisée en ce qu'**elle a un taux d'acide gras saturé inférieur à 40 % en poids par rapport à l'ensemble du produit, plus préférablement inférieur à 30 % en poids.

3. Utilisation d'amidon traité par l'amylomaltase dans une émulsion eau dans l'huile qui comprend de l'huile ou des matières grasses ou un mélange d'une ou plusieurs huiles et matières grasses, de l'eau et de l'amidon traité par l'amylomaltase est présent dans la phase aqueuse, de préférence 1 - 12 % en poids d'amidon traité par l'amylomaltase sont présents dans la phase aqueuse, plus préférablement 3 à 10 % en poids et l'amidon traité par l'amylomaltase comprenant de l'amylopectine acyclique.

4. Utilisation selon la revendication 3, **caractérisée en ce que** l'émulsion eau dans l'huile a une teneur en matières grasses comprise entre 15 et 80 % en poids, de préférence comprise entre 20 et 80 % en poids, plus préférablement comprise entre 35 et 70 % en poids et de façon tout à fait préférable comprise entre 40 et 70 % en poids.

5. Utilisation selon la revendication 3 ou 4, pour préparer une margarine, de préférence une margarine de cuisson, ayant une teneur en acides gras saturés (AGS) inférieure à une margarine de cuisson préparée sans l'amidon traité par l'amylomaltase.

6. Utilisation selon la revendication 5, **caractérisée en ce que** la margarine a un taux d'acides gras saturés inférieur à 40 % en poids par rapport à l'ensemble du produit, plus préférablement inférieur à 30 % en poids.

7. Procédé de préparation d'un produit de pâtisserie ou de boulangerie, **caractérisé en ce qu'**il comprend l'utilisation de l'émulsion eau dans l' huile selon la revendication 1 dans la préparation d'un produit de pâtisserie ou de boulangerie, de préférence d'une pâte feuilletée ou d'un gâteau ou d'un biscuit préparés par un procédé de moulage rotatif.

8. Produit de pâtisserie ou de boulangerie qui est obtenu par le procédé selon la revendication 7 et qui comprend une teneur réduite en matières grasses par rapport à un produit de pâtisserie ou de boulangerie où une émulsion eau dans l'huile est utilisée qui ne comprend pas d'amidon traité par l'amylomaltase.
